Europäisches Patentamt

European Patent Office

Office européen des brevets

(19)

(11) Veröffentlichungsnummer: **0 169 348**
**B1**

(12)                          # EUROPÄISCHE PATENTSCHRIFT

(45) Veröffentlichungstag der Patentschrift:
10.08.88

(51) Int. Cl.⁴: **B 60 R 13/06**

(21) Anmeldenummer: **85106781.9**

(22) Anmeldetag: **01.06.85**

(54) **Halterung einer Scheibe, vorzugsweise einer Windschutzscheibe.**

(30) Priorität: **21.07.84 DE 3426995**

(43) Veröffentlichungstag der Anmeldung:
**29.01.86 Patentblatt 86/5**

(45) Bekanntmachung des Hinweises auf die Patenterteilung:
**10.08.88 Patentblatt 88/32**

(84) Benannte Vertragsstaaten:
**DE FR GB IT**

(56) Entgegenhaltungen:
**DE-A-3 131 529**
**DE-A-3 210 106**
**DE-B-2 520 320**
**FR-A-2 065 104**
**GB-A-2 140 068**

(73) Patentinhaber: **Dr.Ing.h.c. F. Porsche Aktiengesellschaft, Porschestrasse 42, D-7000 Stuttgart 40 (DE)**

(72) Erfinder: **Ziegler, Hermann, Blumenstrasse 19, D-7253 Renningen (DE)**

EP 0 169 348 B1

LIBER, STOCKHOLM 1988

## Beschreibung

Die Erfindung bezieht sich auf eine Halterung einer Scheibe, vorzugsweise einer Windschutzscheibe in Fahrzeugen, insbesondere Kraftfahrzeugen, bei der die Scheibe mittels eines schnurförmigen Klebeelementes in Lage gehalten ist und örtlich auf einem Elastomerprofil aufliegt, das sich aus einem auf den Flansch des Scheibenrahmens aufgestecktem Klemmteil und einem an das Klemmteil anschließenden, die Scheibe auf Distanz zum Scheibenrahmen haltenden Stützteil zusammensetzt, wobei das Klemmteil mit einer metallischen Versteifungseinlage versehen ist.

Bei einer bekannten Halterung der eingangs genannten Gattung (DE-A-3 131 529) ist die Scheibe unter Vermittlung eines Klebeelementes am Flansch des Scheibenrahmens befestigt. Auf das freie Ende des Flansches ist das Elastomerprofil aufgesteckt, das die Scheibe auf Distanz zur Anlagefläche hält. Dieser Ausführung haftet der Nachteil an, daß zum Ausbau dieser Scheibe, beispielsweise weil sich nach der Endmontage Kratzspuren auf dieser zeigen oder zu Reparaturzwecken, aufwendige Maßnahmen erforderlich sind. Zum Ausbau ist es notwendig, das Klebeelement durch einen Meißelvorgang vom Flansch des Windschutzscheibenrahmens zu trennen. Dies ist nicht nur zeitraubend, sondern birgt die Gefahr in sich, daß der Flansch hierbei verformt wird und danach nicht mehr lagerichtig zur Windschutzscheibe ausgerichtet ist.

Da das Klebeelement neben dem Elastomerprofil angeordnet ist, muß der Flansch des Scheibenrahmens eine relativ große Breite aufweisen, was die freie Gestaltung in diesem Bereich wesentlich beeinträchtigt. Wegen des beträchtlichen Abstands zwischen Scheibe und Flansch ist eine große Menge an Kleber erforderlich, was zu hohen Kosten führt.

Aus der DE-A-3 210 106 ist eine Halterung für eine Scheibe bekannt, wobei die Scheibe unmittelbar mit einem auf den Scheibenrahmen aufgesetzten Elastomerprofil verklebt ist. Bei dieser Anordnung weist das Elastomerprofil an seiner Oberseite eine ebene Fläche auf, in deren Bereich die Scheibe unter Vermittlung eines dünnschichtigen Klebeelementes mit dem Elastomerprofil verbunden ist.

Nachteilig an dieser Halterung ist jedoch, daß dieses Klebeelement nicht in der Lage ist, die in der Praxis auftretenden Fertigungstoleranzen, insbesondere die der Scheibe (Welligkeit des Scheibenrandes), auszugleichen, wodurch örtlich Undichtigkeiten zwischen Scheibe und Scheibenrahmen auftreten können. Da bei dieser Scheibenhalterung vorgesehen ist, das Elastomerprofil vor dem Aufstecken auf den Scheibenrahmen zuerst mit der Scheibe zu verbinden, muß das Elastomerprofil relativ weich und biegsam ausgebildet sein, um die nachträgliche Montage der Baueinheit Elastomerprofil - Scheibe zu ermöglichen. Dies hat zur Folge, daß die Scheibe bei einem Unfallstoß nicht so im Scheibenrahmen gehalten wird, wie es beispielsweise die US-Gesetzgebung vorschreibt.

Aufgabe der Erfindung ist es, eine Halterung einer mit einem Elastomerprofil zusammenwirkenden Scheibe so zu verbessern, daß bei reduziertem Klebemittelbedarf Fertigungstoleranzen gut ausgleichbar sind und daß die Scheibe auch nach einem Unfall sicher im Scheibenrahmen gehalten wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung erzielten Vorteile sind darin zu sehen, daß durch die Ausbildung des Elastomerprofils und des schnurförmigen Klebekörpers Fertigungstoleranzen leicht ausgleichbar sind und die Scheibe sicher und vorschriftsmäßig im Scheibenrahmen gehalten wird.

Durch den geringen Abstand zwischen Rinne und Scheibe kann die benötigte Menge an Kleber wesentlich reduziert werden. Ferner stellt das Auftragen des Klebers in die Rinne eine Montageerleichterung dar, da die Lage des Klebers eindeutig festgelegt ist.

Die beiden Lippen des Elastomerprofils verhindern ein unerwünschtes Ausbreiten des Klebeelementes über die Scheibe, wobei die den Rand der Scheibe abgekehrte, faltenartige Lippe stets unter Vorspannung an der Innenseite der Scheibe anliegt. Durch die Anordnung einer Querschnittseinschnürung und eines Hohlraumes am Stützteil wird eine leichte Durchtrennung des Elastomerprofils im Reparaturfall gewährleistet, da die verbleibenden Stege eine geringe Wanddicke aufweisen.

Ein Ausführungsbeispiel der Erfindung ist in der Zeichnung dargestellt und wird im folgenden näher erläutert.

Es zeigt

Fig. 1     eine Teilvorderansicht eines Kraftfahrzeuges mit einer Halterung einer Scheibe,

Fig. 2     einen Schnitt nach der Linie II-II der Fig. 1 in größerem Maßstab.

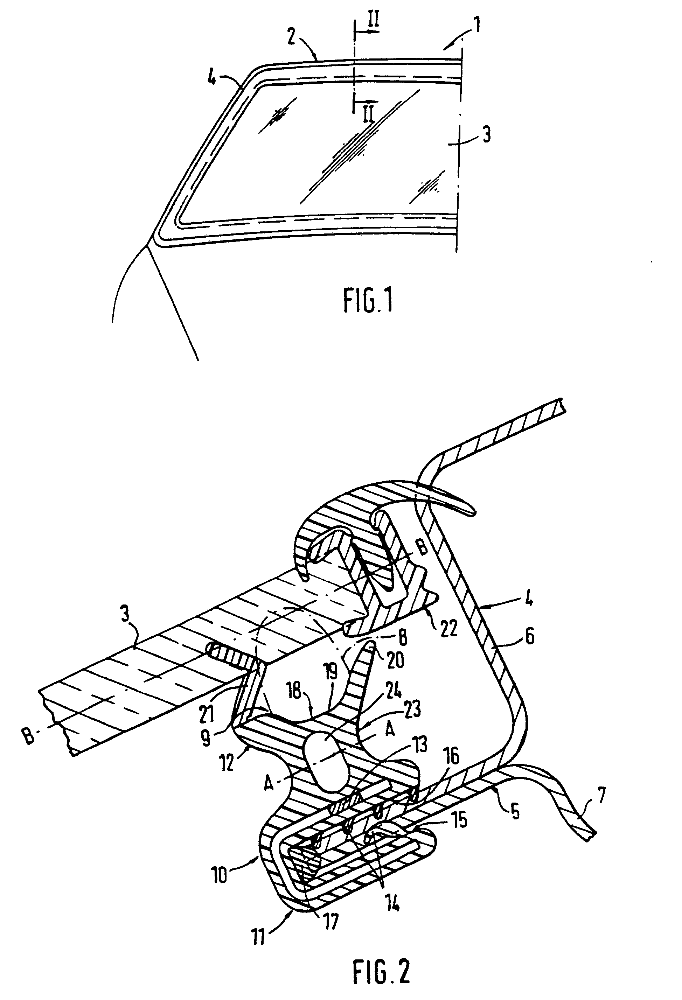

In Fig. 1 ist ein Kraftfahrzeug dargestellt, das einen Aufbau 2 mit einer Windschutzscheibe 3 umfaßt. Zur Halterung der Windschutzscheibe 3 ist ein Scheibenrahmen 4 vorgesehen, der einen Flansch 5 aufweist. Der Flansch 5 wird durch Aufbauteile 6, 7 gebildet.

Die Windschutzscheibe 3 wird mittels eines Klebeelementes 8 in Lage gehalten, das zwischen der Windschutzscheibe 3 und der Oberseite 9 eines auf dem Flansch 5 aufgesteckten Elastomerprofils 10 angeordnet ist. Das Elastomerprofil 10 wird durch ein etwa U-förmig ausgebildetes Klemmteil 11 und ein darüberliegendes, die Windschutzscheibe 3 auf Distanz zum Scheibenrahmen 4 haltendes Stützteil 12 gebildet, wobei Klemmteil 11 und Stützteil 12 einstückig miteinander verbunden sind.

Das mit dem Flansch 5 zusammenwirkende Klemmteil 11 weist eine metallische Versteifungseinlage 13 und Greif- bzw. Dichtlippen 14 auf, die sich von gegenüberliegenden Innenwänden 15, 16 des Klemmteiles 11 aus nach innen erstrecken und an gegenüberliegenden Seiten des Flansches 5 unter Vorspannung anliegen. Ferner ist zwischen Klemmteil 11 und dem Flansch 5 ein dauerelastisches Dichtelement 17 vorgesehen.

Das Stützteil 12 weist an seiner Oberseite 9 örtlich eine Vertiefung 18 zur Aufnahme des schnurförmigen Klebeelementes 8 auf. Die Vertiefung 18 wird gemäß Fig. 2 durch eine muldenförmige Rinne 19 gebildet, die von zwei sich zur Windschutzscheibe 3 hin erstreckenden Lippen 20, 21 begrenzt wird. Es besteht aber auch die Möglichkeit, die Vertiefung 18 im Querschnitt wannenförmig, halbkreisförmig oder dergleichen auszubilden.

Die zum Scheibenrahmen 4 hin verlaufende äußere Lippe 20 ist an eine Scheibenrandeinfassung 22 herangeführt, wogegen die dem Rand der Scheibe abgekehrte Lippe 21 faltenartig ausgebildet ist und sich unter Vorspannung an der Windschutzscheibe 3 abstützt. Die Lippen 20, 21, die Form der Vertiefung 18 und die Lage der Wirdschutzscheibe 3 bestimmen den Klebemittelbedarf, wobei die Lippen 20, 21 ein unerwünschtes Ausbreiten des Klebeelementes 8 über die Windschutzscheibe 3 verhindern.

Zwischen der muldenförmigen Rinne 19 und der Versteifungseinlage 13 weist das Stützteil 12 eine Querschnittseinschnürung 23 und einen Hohlraum 24 auf, so daß entlang der Ebene A-A ein schnelles und leichtes Durchtrennen des Elastomerprofils 10 beim Ausbau einer beschädigten Windschutzscheibe 3 erfolgen kann.

Die faltenartige Lippe 21 und die Greif- bzw. Dichtlippen 14 sind aus Weich-PVC mit einer Shore-Härte von etwa 60 ± 3 gefertigt, wogegen der restliche Teil des Elastomerprofils aus Hart-PVC besteht, das eine Shore-Härte von 80 ± 3 aufweist.

Als Klebeelement wird ein Ein-Komponenten-Polyurethan-Kleber wie Betaseal, Solbit oder dergleichen verwendet, der in der Lage ist, Fertigungstoleranzen, insbesondere in senkrechter Richtung zur Scheibenebene B-B auszugleichen. Das Klebeelement 8 wird schnurförmig aufgebracht, und zwar direkt in die Rinne 19.

## Patentansprüche

1. Halterung einer Scheibe, vorzugsweise einer Windschutzscheibe (3) in Fahrzeugen, insbesondere Kraftfahrzeugen, bei der die Scheibe (3) mittels eines schnurförmigen Klebeelementes (8) in Lage gehalten ist und örtlich auf einem Elastomerprofil (10) aufliegt, das sich aus einem auf den Flansch (5) des Scheibenrahmens (4) aufgesteckten Klemmteil (11) und einem an das Klemmteil (11) anschließenden, die Scheibe (3) auf Distanz zum Scheibenrahmen (4) haltenden Stützteil (12) zusammensetzt, wobei das Klemmteil (11) mit einer metallischen Versteifungseinlage (13) versehen ist, dadurch gekennzeichnet, daß eine Vertiefung (18) zur Aufnahme des schnurförmigen Klebeelementes (8) örtlich an der dem Klemmteil (12) abgewandten Seite des sich zur Scheibe (3) hin erstreckenden Stützteiles (12) vorgesehen ist.

2. Halterung nach Anspruch 1, dadurch gekennzeichnet, daß die Vertiefung (18) durch eine muldenartige Rinne (19) gebildet wird, die von zwei Lippen (20, 21) begrenzt wird.

3. Halterung nach Anspruch 2, dadurch gekennzeichnet, daß die dem Rand der Scheibe (3) zugekehrte Lippe (20) an eine Scheibenrandeinfassung (22) herangeführt ist, wogegen die dem Rand der Scheibe (1) abgekehrte und Einbautoleranzen aufnehmende Lippe (21) faltenartig ausgebildet ist und unter Vorspannung an der Scheibe (3) anliegt.

4. Halterung nach Anspruch 1, dadurch gekennzeichnet, daß das Stützteil (12) zwischen der muldenförmigen Rinne (19) und der Versteifungseinlage (13) eine Querschnittseinschnürung (23) aufweist und daß in diesem Bereich ein Hohlraum (24) vorgesehen ist.

## Claims

1. A mounting for a pane, preferably a windscreen (3) in vehicles, in particular motor vehicles, in which the pane (3) is held in position by means of a cord-shaped adhesive element (8) and rests locally on an elastomeric profile (10) comprising a clamping part (11) placed on the flange (5) of the pane frame (4) and a supporting part (12) adjacent to the clamping part (11) and holding the pane (3) at a distance from the pane frame (4), wherein the clamping part (11) is provided with a metallic reinforcing insert (13), characterised in that a recess (18) for receiving the cord-shaped adhesive element (8) is arranged on the side, remote from the clamping part (11), of the supporting part (12) extending towards the pane (3).

2. A mounting according to Claim 1, characterised in that the recess (18) is formed by a trough-shaped groove (19) which is limited by two lips (20, 21).

3. A mounting according to Claim 2, characterised in that the lip (20) facing the edge of the pane (3) is extended towards a border (22) for the pane edge, whereas the lip (21) which is remote from the edge of the pane (3) and accommodates fitting tolerances is formed with folds and rests under pre-stress on the pane (3).

4. A mounting according to Claim 1,
characterised in that the supporting part (12) has
a constriction (23) in cross section between the
trough-shaped groove (19) and the reinforcing
insert (13) and that a hollow cavity (24) is
provided in this region.

**Revendications**

1. Fixation d'une vitre, de préférence d'un parebrise (3) dans des véhicules, notamment des
véhicules automobiles, dans laquelle la vitre (3)
est maintenue en position au moyen d'un adhésif
(8) formant un cordon et s'appuie localement sur
un profil d'élastomère (10) qui se compose d'une
section de serrage (11) placée sur le rebord (5) du
cadre (4) de la vitre et d'une section d'appui (12)
se raccordant à la section de serrage (11),
maintenant la vitre (3) à distance de son cadre
(4), la section de serrage (11) comportant un
renforcement intérieur métallique (13),
caractérisée en ce qu'il est prévu un creux (18)
destiné à recevoir l'adhésif (8) formant un cordon
localement du côté de la section d'appui (12)
s'étendant vers la vitre (3) opposé à la section de
serrage (11).

2. Fixation selon la revendication 1,
caractérisée en ce que le creux (18) est formé par
un canal (19) en forme d'auge qui est délimité par
deux lèvres (20, 21).

3. Fixation selon la revendication 2,
caractérisée en ce que la lèvre (20) située du côté
du bord de la vitre (3) rejoint un encadrement de
vitre (22), tandis que la lèvre (21) opposée au
bord de la vitre (1) et absorbant les tolérances de
montage est repliée et est en contact sous
précontrainte avec la vitre (3).

4. Fixation selon la revendication 1,
caractérisée en ce que la section d'appui (12)
présente entre le canal en forme d'auge (19) et le
renforcement intérieur (13) un rétrécissement de
section droite (23), et en ce qu'il est prévu une
cavité (24) dans cette zone.

FIG.1

FIG.2